Europäisches Patentamt

European Patent Office

Office européen des brevets

(19)

(11) Veröffentlichungsnummer: **0 230 582**
**A1**

(12) **EUROPÄISCHE PATENTANMELDUNG**

(21) Anmeldenummer: 86117012.4

(22) Anmeldetag: 08.12.86

(51) Int. Cl.³: **C 03 C 1/02**

(30) Priorität: 21.12.85 DE 3545610

(43) Veröffentlichungstag der Anmeldung:
05.08.87 Patentblatt 87/32

(84) Benannte Vertragsstaaten:
CH DE FR GB IT LI NL SE

(71) Anmelder: BAYER AG
Konzernverwaltung RP Patentabteilung
D-5090 Leverkusen 1 Bayerwerk(DE)

(72) Erfinder: Woditsch, Peter, Dr.
Deswatinesstrasse 83
D-4150 Krefeld 1(DE)

(72) Erfinder: Kannchen, Werner
Schuhmannstrasse 14
D-4100 Duisburg 46(DE)

(72) Erfinder: Kurz, Günter, Dr.
Niederrheinstrasse 288
D-4000 Düsseldorf 31(DE)

(72) Erfinder: Schwirtlich, Ingo, Dr.
Hausweberstrasse 26
D-4150 Krefeld 1(DE)

(54) Verfahren zur Reinigung von Kieselsäure.

(57) Verfahren zur Reinigung von $SiO_2$ durch Laugung einer wäßrigen $SiO_2$-enthaltenden Suspension mit Mineralsäuren, wobei die Laugung unter Zusatz von Flußsäure zu den Mineralsäuren erfolgt.

EP 0 230 582 A1

Croydon Printing Company Ltd.

0230582

BAYER AKTIENGESELLSCHAFT     5090 Leverkusen, Bayerwerk

Konzernverwaltung RP

Patentabteilung          St/Ke-c

BEZEICHNUNG GEÄNDERT
siehe Titelseite

Verfahren zur Reinigung von $SiO_2$
_____

Die vorliegende Erfindung betrifft ein Verfahren zur Reinigung von $SiO_2$ durch Laugung einer wäßrigen $SiO_2$-haltigen Suspension mit Mineralsäuren sowie ein erfindungsgemäß gereinigtes $SiO_2$.

Hochreines Siliciumdioxid wird heute für eine Vielzahl von Anwendungsbereichen benötigt, beispielsweise zur Herstellung von hochreinen Gläsern ohne besondere Eigenabsorption und mit hoher Lichtdurchlässigkeit. Ein weiteres Einsatzgebiet ist die Herstellung von Solarsilicium aus gereinigtem $SiO_2$ und reinem Kohlenstoff im Lichtbogenofen. Bei diesem Verfahren ist ein Siliciumdioxid notwendig, das hinsichtlich Bor und Phosphor hochrein ist, d.h. beide Elemente müssen unter 1 ppm liegen. Ein weiteres Einsatzgebiet für hochreines Siliciumdioxid ist die Quarzherstellung, wo ebenfalls die Verunreinigung an Einzelelementen möglichst gering sein sollte.

Le A 24 261-Ausland

Neben der Auswahl bestimmter hochreiner Quarze, die in der Natur in bestimmten Lagerstätten gefunden werden, z.B. pegmatitischer Quarz und der Herstellung von hochreinem $SiO_2$ durch Flammenhydrolyse oder Umsetzung von Siliciumtetrachlorid mit Sauerstoff im Plasmabrenner, sind weitere Wege zur Herstellung von reinem Siliciumdioxid möglich. Die Aufbereitung von Sanden durch Behandlung mit Schwefelsäure, Waschen und Flotation ist in der US-A 4 401 638 beschrieben. Ein weiteres Verfahren zur Reinigung von $SiO_2$ ist in den Patentschriften DE-A 3 215 981, DE-A 3 123 009 und DE-A 3 123 024 beschrieben. Dabei wird aus natürlichen $SiO_2$-Vorkommen unter Zusatz von Oxiden oder Carbonaten der ersten bis dritten Hauptgruppe des Periodensystems ein Glas erschmolzen, das zu Fäden ausgezogen und anschließend eventuell nach einer Temperung, mit Säuren ausgelaugt wird. Dieses Verfahren führt zu einem hochreinen $SiO_2$, erzeugt aber je kg $SiO_2$ mehrere kg an Metallsalzen, die ein ökologisches Problem und deren Aufarbeitung einen hohen Kostenfaktor bedeuten.

Es ist daher von großem Interesse ein Reinigungsverfahren für $SiO_2$ zu entwickeln, das kostengünstig und ökologisch ohne Probleme durchführbar ist.

Metallische Verunreinigungen von Quarz sollten immer dann, wenn sie nicht in das $SiO_2$ eingebaut sind einem Angriff durch Mineralsäuren zugänglich sein. Behandelt man $SiO_2$-Sande mit Mineralsäuren, so sind die Verunreinigungen bis zu einem gewissen Umfang löslich und damit abzureichern.

Le A 24 261

Überraschenderweise hat sich herausgestellt, daß die Reinigungswirkung deutlich gesteigert werden kann, wenn der Suspension von $SiO_2$ in Mineralsäuren oder der Mineralsäure bei der Laugung eine bestimmte Menge Flußsäure zugesetzt wird.

Gegenstand der vorliegenden Erfindung ist somit ein Verfahren zur Reinigung von $SiO_2$ durch Laugung einer wäßrigen $SiO_2$-enthaltenden Suspension mit Mineralsäuren, dadurch gekennzeichnet, daß die Laugung unter Zusatz von Flußsäure zu den Mineralsäuren erfolgt. Durch dieses Verfahren wird ein erheblich größerer Anteil an Verunreinigungen der Laugung zugänglich.

Eine Optimierung des Reinigungseffektes entsprechend den jeweiligen Reinheitsanforderungen ist für den Fachmann leicht möglich. Es zeigt sich, daß der Reinigungseffekt umso größer wird je feinteiliger das $SiO_2$ vorliegt, insbesondere wenn es vor der Laugung einer Mahlung unterworfen wurde. Die Reinigungswirkung steigt ebenfalls mit zunehmender Laugungsdauer an, wobei nach etwa 8 bis 24 Stunden ein gewisses Optimum erreicht wird. Selbstverständlich kann auch nach einer Stunde bereits eine ausreichende Reinigungswirkung für bestimmte Einsatzgebiete erreicht werden. Bei Temperaturen oberhalb 60°C wird eine besonders gute Laugungswirkung erzielt. Weiterhin müssen ausreichende Säuregehalte bei der Laugung vorhanden sein, da sonst durch Hydrolyse eine Ausfällung der in Lösung gegangenen höherwertigen Elemente wie Ti, Fe etc. erfolgen kann. So ist auch bei der nachfolgenden Waschung zunächst mit verdünnter Mineralsäure zu waschen, bevor diese dann durch Wasser entsprechender Reinheit verdrängt wird.

Le A 24 261

Die zugegebene Menge an Flußsäure muß nach dem erfindungsgemäßen Verfahren eine bestimmte Mindestmenge überschreiten, um die volle Wirksamkeit zu entfalten. So ist ein Zusatz von 0,5 % bereits ausreichend, um die erfindungsgemäße besondere Reinigungswirkung einzuleiten und zu besseren Laugungsergebnissen zu kommen als ohne den Zusatz von Flußsäure. Da die Flußsäure mit dem zu reinigenden Siliciumdioxid reagiert und $SiO_2$ in Hexafluorkieselsäure überführt, wird man versuchen mit möglichst wenig Flußsäure den gewünschten Reinigungseffekt anzustreben. Ein Zusatz von bis zu 6 % HF bezogen auf $SiO_2$ erwies sich als ausreichend. Höhere Mengen verbessern die Reinigungswirkung nur noch unwesentlich, so daß aus Wirtschaftlichkeitsgründen auf den Einsatz von mehr als 6 % verzichtet werden kann. Besonders bevorzugt ist somit die Ausgestaltung des erfindungsgemäßen Verfahrens, bei der die Flußsäure in Mengen von 0,5 bis 6 % HF, bezogen auf $SiO_2$, zugesetzt wird. Bei Verwendung von 0,5 bis 6 % HF betragen die Verluste an $SiO_2$ nur 0,25 bis 2,5 Gewichtsprozent und fallen damit kostenmäßig nicht in das Gewicht. Bei Einsatz von erheblich größeren Flußsäuremengen wird allerdings eine Aufarbeitung und Rückgewinnung an $SiO_2$ aus der gebildeten Hexafluorkieselsäure unvermeidlich.

Aus der Hexafluorkieselsäure kann dabei entweder die Fällung von $SiO_2$ mit Basen wie $NH_3$, $NaOH$ oder $Al(OH)_3$ oder die Herstellung von $SiF_4$ durch Fällung als $Na_2SiF_6$ und anschließendes Erhitzen betrieben werden. Sowohl $SiO_2$ als

Le A 24 261

auch $SiF_4$ können dabei rein erhalten werden und anschließend mit Kohlenstoff oder Aluminium bzw. mit Natrium zu elementarem Silicium reduziert werden. Die dabei entstehenden Fluoride können als Rohstoffe zur Herstellung von Flußsäure weiterverwendet oder in Kryolith umgewandelt werden. Die Säurelaugung von $SiO_2$ mit dem erfindungsgemäßen Säuregemisch, das immer Flußsäure enthalten muß, sollte bevorzugt unter Rühren oder im Gegenstromverfahren durchgeführt werden, um örtliche hohe Konzentrationen der verunreinigenden Elemente zu vermeiden. Die Gegenstromlaugung ist dabei ein technisch besonders wirksames Verfahren und erlaubt es die Säuren recht gut auszunutzen. Verbessern läßt sich das Verhältnis zwischen zu laugendem $SiO_2$ und Mineralsäuren dadurch, daß die verbrauchte HF an verschiedenen Stellen zudosiert wird.

Arbeitet man diskontinuierlich so empfiehlt sich ein bestimmtes $SiO_2$/Säureverhältnis. Um gleichmäßige Benetzung und gute Durchmischung zu erzielen kann dieses Verhältnis auf 1:1 bis 1:4 eingestellt werden. Gut rührfähige Suspensionen und sehr gute Reinigungswirkung konnten wir bei einem $SiO_2$-Säureverhältnis von 1 zu 2,5 erzielen. Selbstverständlich kann das Verfahren mit sehr gutem Laugungsergebnis auch als Extraktion gefahren werden, wobei vorzugsweise eine azeotrope HCl verwendet wird und dieser ständig geringe Mengen an HF zudosiert werden.

Der Laugungseffekt ist unabhängig von dem Zeitpunkt der HF-Zugabe. Gleichgültig ob von vornherein eine flußsäurehaltige Mineralsäure zur Reinigung von $SiO_2$ eingesetzt oder ob zunächst eine $SiO_2$-Mineralsäure-Suspension erzeugt und anschließend HF zudosiert wird, kann immer eine bessere Reinigung erzielt werden als ohne Flußsäurezusatz.

Le A 24 261

Die Reinigungswirkung ist in gewissem Umfang auch von der Wahl bei den Mineralsäuren unabhängig. Gute Ergebnisse konnten mit Salzsäure, Schwefelsäure und Salpetersäure allein oder im Gemisch erzielt werden. Je nach ökologischem und ökonomischem Umfeld wird man sich für eine dieser 3 Säuren entscheiden, wobei auch die anzuwendenden Temperaturen entsprechend den unterschiedlichen Siedepunkten der Säuren variierbar sind.

Um den Bedarf an Säure je Gewichtseinheit $SiO_2$ möglichst gering zu halten, kann auch die Rückführung der Säuren in Erwägung gezogen werden. Dies ist möglich, wenn jeweils vor dem erneuten Einsatz oder während des Laugungsprozesses die erneute Flußsäurezugabe erfolgt. Es können dann mehrere Zyklen durchfahren werden, bevor die Säure in einen Wiederaufbereitungsschritt eingebracht wird.

Gegenstand der vorliegenden Erfindung ist auch ein nach Laugung mit Mineralsäuren gereinigtes $SiO_2$ mit einem Gehalt von weniger als 300 ppm an metallischen Verunreinigungen.

Die erzielbaren Reinigungseffekte werden anhand der folgenden Beispiele näher erläutert, ohne daß durch diese Verfahrensvarianten eine Einschränkung der Erfindung zu sehen ist.

Le A 24 261

Beispiel 1

Als Behandlungsgefäß wurde ein gut isolierter, 60-1-Kunststoffbehälter mit einem Deckel eingesetzt, welcher mit einem Propellerrührer, einem Kühler und einem verschließbaren Einfüllstutzen versehen war.

Zur Säurebehandlung wurden 29,6 kg 25,3 %ige Salzsäure in das Behandlungsgefäß gegeben und unter Rühren 15,0 kg Siliciumdioxid eingetragen. Durch Einleiten von Dampf wurde auf 80° C erwärmt, dann in 10 Minuten etwa 5,0 kg 40,0 %ige Flußsäure zugegeben. Unter Einbeziehung von 2,9 kg Kondenswasser lagen nun 37,5 kg Mischsäure mit Gehalten von 20,0 % HCl und 5,3 % HF vor. Das $SiO_2$-Säureverhältnis war 1:2,5. Die Mischung wurde 21 Stunden gerührt und kühlte dabei auf 32° C ab. Die Filtration und anschließende Waschung mit 60 1 deionisiertem Wasser erfolgt auf einer Kunststoffnutsche mit eingelegtem Dralontuch als Filter. Bei 110° C wurde das filterfeuchte Material bis zur Entfernung der Hauptmenge Wasser vorgetrocknet, danach weitere 24 Stunden bei 250° C gehalten. Es wurden 13,8 kg Siliciumdioxid erhalten.

| | Al | B | Ca | Cr | Cu | Fe | Mg | P | Ti [ppm] |
|---|---|---|---|---|---|---|---|---|---|
| vor der Behandlung | 1900 | 1 | 40 | 19 | <1 | 1200 | 30 | 21 | 65 |
| nach der Behandlung | 38 | 0,6 | 2 | 0,7 | 0,7 | 8 | 1 | 1 | 7 |

Le A 24 261

## Beispiel 2

Entsprechend Beispiel 1 wurden 15,0 kg Siliciumdioxid in 37,5 kg 20 %iger Salzsäure ohne Zusatz von Flußsäure auf 98°C erwärmt, 24 Stunden gerührt, mit 40 1 deionisiertem Wasser gewaschen und nach der Vortrocknung 24 Stunden bei 200°C getrocknet.

|  | Al | B | Ca | Cr | Cu | Fe | Mg | P | Ti [ppm] |
|---|---|---|---|---|---|---|---|---|---|
| vor der Behandlung | 1900 | 1 | 40 | 19 | <1 | 1200 | 30 | 21 | 65 |
| nach der Behandlung | 370 | 1 | 25 | 0,2 | 0,3 | 29 | 8 | 2 | 35 |

## Beispiel 3

Entsprechend Beispiel 1 wurden 15,0 kg Siliciumdioxid in 37,5 kg Mischsäure mit Gehalten von 20,0 % HCl und 2,3 % HF auf 98°C erwärmt, 17,5 Stunden gerührt, mit 50 1 deionisiertem Wasser gewaschen und 65 Stunden bei 110°C getrocknet.

|  | Al | B | Ca | Cr | Cu | Fe | Mg | P | Ti [ppm] |
|---|---|---|---|---|---|---|---|---|---|
| vor der Behandlung | 1900 | 1 | 40 | 19 | <1 | 1200 | 30 | 21 | 65 |
| nach der Behandlung | 53 | 0,6 | 2 | 0,5 | 0,6 | 10 | 1 | 1 | 21 |

Le A 24 261

## Beispiel 4

Entsprechend Beispiel 1 wurden 8,0 kg Siliciumdioxid in 20 kg 25 %iger Schwefelsäure ohne Zusatz von Flußsäure auf 87° C erwärmt, 23,25 Stunden gerührt, mit 40 1 deionisiertem Wasser gewaschen und nach der Vortrocknung 16 Stunden bei 200° C getrocknet.

|  | Al | B | Ca | Cr | Cu | Fe | Mg | P | Ti [ppm] |
|---|---|---|---|---|---|---|---|---|---|
| vor der Behandlung | 1900 | 1 | 40 | 19 | <1 | 1200 | 30 | 21 | 65 |
| nach der Behandlung | 1200 | 0,7 | 100 | 1 | 0,6 | 76 | 14 | 10 | 19 |

## Beispiel 5

Entsprechend Beispiel 4 wurden 8,0 kg Siliciumdioxid in 20 kg Mischsäure mit Gehalten von 25 % $H_2-SO_4$ und 1,2 % HF (entspricht 3 % HF bezogen auf $SiO_2$) auf 80° C erwärmt, 28,5 Stunden gerührt, mit 130 1 deionisiertem Wasser gewaschen und nach der Vortrocknung 67 Stunden bei 700° C getrocknet.

|  | Al | B | Ca | Cr | Cu | Fe | Mg | P | Ti [ppm] |
|---|---|---|---|---|---|---|---|---|---|
| vor der Behandlung | 1900 | 1 | 40 | 19 | <1 | 1200 | 30 | 21 | 65 |
| nach der Behandlung | 72 | 0,6 | 40 | 0,4 | 0,4 | 17 | 5 | 3 | 16 |

Le A 24 261

Beispiel 6

Entsprechend Beispiel 1 wurden 8,0 kg Siliciumdioxid in 20 kg 30 %iger Salpetersäure ohne Zusatz von Flußsäure auf 85°C erwärmt, 27,75 Stunden gerührt, mit 120 l deionisiertem Wasser gewaschen und nach dem Vortrocknen 17 Stunden bei 200°C getrocknet.

|  | Al | B | Ca | Cr | Cu | Fe | Mg | P | Ti [ppm] |
|---|---|---|---|---|---|---|---|---|---|
| vor der Behandlung | 1900 | 1 | 40 | 19 | <1 | 1200 | 30 | 21 | 65 |
| nach der Behandlung | 950 | 0,7 | 40 | 1 | 1 | 180 | 14 | 9 | 13 |

Beispiel 7

Entsprechend Beispiel 6 wurden 8,0 kg Siliciumdioxid in 20 kg Mischsäure mit Gehalten von 30 % $HNO_3$ und 1,2 % HF (entspricht 3 % HF bezogen auf $SiO_2$) auf 88°C erwärmt, 27,75 Stunden gerührt und nach dem Vortrocknen 63,5 Stunden bei 200°C getrocknet.

|  | Al | B | Ca | Cr | Cu | Fe | Mg | P | Ti [ppm] |
|---|---|---|---|---|---|---|---|---|---|
| vor der Behandlung | 1900 | 1 | 40 | 19 | <1 | 1200 | 30 | 21 | 65 |
| nach der Behandlung | 64 | 0,1 | 35 | 0,09 | 2 | 20 | 2 | 2 | 10 |

Le A 24 261

## Beispiel 8

Im Vergleich zu Beispiel 1 wurde Siliciumdioxid in Mischsäure im Verhältnis 1:2,5 gerührt, wobei die Mischsäure
Gehalte von 20 % HCl und 0,8 % HF aufwies (entspricht 2 %
HF bezogen auf $SiO_2$). Nach dem Erwärmen auf 98°C und einer
Behandlungszeit von 21 Stunden wurde mit 90 1 deionisiertem Wasser gewaschen und nach dem Vortrocknen 24 Stunden
bei 200°C getrocknet.

|  | Al | B | Ca | Cr | Cu | Fe | Mg | P | Ti [ppm] |
|---|---|---|---|---|---|---|---|---|---|
| vor der Behandlung | 1900 | 1 | 40 | 19 | <1 | 1200 | 30 | 21 | 65 |
| nach der Behandlung | 68 | 2 | 20 | n.n. | 0,2 | 13 | 3 | 2 | 48 |
| nach der Behandlung Bsp.1 | 38 | 0,6 | 2 | 0,7 | 0,7 | 8 | 1 | 1 | 7 |

## Beispiel 9

Zur Prüfung der Reinigungswirkung in Abhängigkeit von der
Flußsäurekonzentration wurde auf der Basis von Beispiel
1 Siliciumdioxid in Salzsäure im Verhältnis 1:1 mit verschiedenen Flußsäuregehalten je eine Stunde bei 65°C
gerührt, mit deionisiertem Wasser gewaschen und bei 130°C
getrocknet.

Le A 24 261

|  | Al | B | Fe | Mg | P | Ti [ppm] |
|---|---|---|---|---|---|---|
| vor der Behandlung | 1900 | 1 | 1200 | 30 | 21 | 65 |
| nach der Behandlung in 20 %iger HCl, ohne HF | 1350 | <1 | 85 | 14 | 13 | 33 |
| 20 %iger HCl, 1 %iger HF | 180 | <1 | 23 | 4,5 | 6 | 31 |
| 20 %iger HCl, 2 %iger HF | 100 | <1 | 13 | 2,1 | 4 | 26 |
| 20 %iger HCl, 3 %iger HF | 85 | <1 | 9 | 2,1 | 3 | 27 |
| 20 %iger HCl, 4 %iger HF | 73 | <1 | 9 | 1,8 | 2 | 24 |
| 20 %iger HCl, 5 %iger HF | 75 | <1 | 9 | 2 | 3 | 25 |

Le A 24 261

## Patentansprüche

1. Verfahren zur Reinigung von $SiO_2$ durch Laugung einer wäßrigen $SiO_2$-enthaltenden Suspension mit Mineralsäuren, dadurch gekennzeichnet, daß die Laugung unter Zusatz von Flußsäure zu den Mineralsäuren erfolgt.

2. Verfahren gemäß Anspruch 1, dadurch gekennzeichnet, daß die Flußsäure in Mengen von 0,5 bis 6 % HF, bezogen auf $SiO_2$, zugesetzt wird.

3. Verfahren gemäß Anspruch 1 oder 2, dadurch gekennzeichnet, daß die Laugung bei Temperaturen oberhalb 60°C durchgeführt wird.

4. Verfahren gemäß Anspruch 1 bis 3, dadurch gekennzeichnet, daß die übrigen Mineralsäuren ein Gemisch aus Salzsäure, Salpetersäure und/oder Schwefelsäure sind.

5. Ein gemäß den Ansprüchen 1 bis 4 hergestelltes $SiO_2$ mit einem Gehalt von weniger als 300 ppm an metallischen Verunreinigungen.

Le A 24 261

**Europäisches Patentamt**

**EUROPÄISCHER RECHERCHENBERICHT**

0230582

Nummer der Anmeldung

EP 86 11 7012

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 559 963 (PILKINGTON BROTHERS LTD) <br> * Beispiel 1; Zusammenfassung 3 * | 1-5 | C 03 C 1/02 |
| X | BE-A- 512 563 (SABLIERES ET CARRIERES REUNIES) <br> * Seite 2, Zeilen 8-47 * | 1-5 | |
| X | CHEMICAL ABSTRACTS, Band 102, Nr. 10, 11. März 1985, Seite 281, Zusammenfassung Nr. 83305b, Columbus, Ohio, US; & DD-A-160 967 (AKADEMIE DER WISSENSCHAFTEN DER DDR) 11-07-1984 <br> * Insgesamt * | 1-5 | |

RECHERCHIERTE SACHGEBIETE (Int Cl 4)

C 03 C 1/00

Der vorliegende Recherchenbericht wurde für alle Patentansprüche erstellt.

| Recherchenort | Abschlußdatum der Recherche | Prüfer |
|---|---|---|
| DEN HAAG | 27-03-1987 | BOUTRUCHE J.P.E. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82